**Europäisches Patentamt**

**European Patent Office**

**Office européen des brevets**

(11) Veröffentlichungsnummer: **0 537 874 B1**

# EUROPÄISCHE PATENTSCHRIFT

(45) Veröffentlichungstag der Patentschrift: **29.11.95**

(51) Int. Cl.⁶: **B60L 7/26**

(21) Anmeldenummer: **92250299.2**

(22) Anmeldetag: **13.10.92**

(54) **Bremseinrichtung für ein nicht-spurgebundenes Fahrzeug.**

(30) Priorität: **16.10.91 DE 4134239**
**23.12.91 DE 4142863**

(43) Veröffentlichungstag der Anmeldung:
**21.04.93 Patentblatt 93/16**

(45) Bekanntmachung des Hinweises auf die
Patenterteilung:
**29.11.95 Patentblatt 95/48**

(84) Benannte Vertragsstaaten:
**CH DE ES FR GB IT LI SE**

(56) Entgegenhaltungen:
**DE-A- 2 427 432**
**DE-A- 3 725 620**
**US-A- 3 866 703**

**PATENT ABSTRACTS OF JAPAN vol. 9, no.
176 (M-398)(1899) 20. Juli 1985 & JP-A-60
046701 ( SANYO DENKI K.K. ) 13 März 1985**

(73) Patentinhaber: **MANNESMANN Aktiengesellschaft**
**Postfach 10 36 41**
**D-40027 Düsseldorf (DE)**

(72) Erfinder: **Adler, Uwe**
**Baunachweg 4**
**W-8720 Schweinfurt (DE)**
Erfinder: **Drexl, Hans-Jürgen**
**Kaltenhöfer Steige 11**
**W-8724 Schonungen/Mbg. (DE)**
Erfinder: **Lutz, Dieter**
**Spessartstrasse 12**
**W-8720 Schweinfurt (DE)**
Erfinder: **Nagler, Franz**
**Am Zehntgrafen 12**
**W-8729 Ottendorf (DE)**
Erfinder: **Ochs, Martin**
**Ebersbergstrasse 10**
**W-8720 Schweinfurt (DE)**
Erfinder: **Schiebold, Stefan**
**Gymnasiumstrasse 4**
**W-8720 Schweinfurt (DE)**
Erfinder: **Schmidt-Brücken, Hans-Joachim**
**Sonnenstrasse 9**
**W-8721 Geldersheim (DE)**
Erfinder: **Thieler, Wolfgang**
**Kastanienweg 1**
**W-8728 Hassfurt (DE)**
Erfinder: **Wagner, Michael**
**Ottostrasse 3**
**W-8721 Niederwerrn (DE)**
Erfinder: **Westendorf, Holger**
**Gänseleite 8**
**W-8721 Hambach (DE)**

Erfinder: **Wychnanek, Rainer**
**Erlenbrunnstrasse 13**
**W-8721 Madenhausen (DE)**


(74) Vertreter: **Meissner, Peter E., Dipl.-Ing. et al**
**Meissner & Meissner,**
**Patentanwaltsbüro,**
**Postfach 33 01 30**
**D-14171 Berlin (DE)**

**Beschreibung**

Die Erfindung betrifft eine Bremseinrichtung für ein nicht-spurgebundenes Fahrzeug, insbesondere für ein Fahrzeug mit mindestens einem Elektromotor, der das Fahrzeug antreibt und über eine Leistungselektronik-Einheit von einem elektrischen Generator und/oder einem elektrischen Speicher mit Strom gespeist wird, mit einer Steuerung, und mit einer mittels Bremspedal betätigten Bremsanlage gemäß dem Oberbegriff des Patentanspruchs 1.

Üblicherweise sind Kraftfahrzeuge, also Personenkraftwagen, Lastkraftwagen, Busse und dergleichen, mit einem Verbrennungsmotor ausgestattet. In jüngerer Zeit sind auch Kraftfahrzeuge mit elektromotorischem Antrieb entwickelt worden, darunter auch sogenannte Fahrzeuge mit Solarantrieb, d.h. Fotozellen, die den Strom für den Antriebs-Elektromotor liefern.

Elektrofahrzeuge mit reinem Batteriebetrieb sind jedoch nur in sehr engen Grenzen einsetzbar, da der elektrische Speicher (Akkumulator) sehr voluminös und schwer ist, wenn man die speicherbare Energie und entsprechend die Fahrleistungen berücksichtigt.

In jüngerer Zeit wurde ein Antriebskonzept vorgeschlagen, bei dem ein Verbrennungsmotor mit einem elektrischen Generator gekoppelt ist, der Elektromotoren speist, welche direkt mit den angetriebenen Rädern des Fahrzeugs gekoppelt sind. Sieht man dazu noch einen Speicher, z.B. ein Schwungrad, als mechanischen Energiespeicher vor, so kann man die kurzfristig zur Verfügung zu stellende Beschleunigungsleistung aus dem Energiespeicher abrufen, während der Verbrennungsmotor mit mehr oder weniger konstanter Drehzahl arbeitet, um laufend Energie in den Schwungrad-Energiespeicher einzuspeisen.

Fahrzeuge mit elektromotorischem Antrieb haben ein grundsätzlich anderes Fahrverhalten als Fahrzeuge mit Verbrennungsmotor-Antrieb. Während bei Verbrennungsmotoren nur ein sehr geringer Drehzahlbereich mit relativ hohem Drehmoment zur Verfügung steht, ist die Änderung des Drehmoments beim Elektromotor weniger stark von der Drehzahl abhängig.

Bei einem Fahrzeug mit Verbrennungsmotor-Antrieb nimmt die Drehzahl des Verbrennungsmotors bei minimaler Kraftstoffzufuhr bis auf einen geringen Wert ab oder bei vollständig abgeschalteter Kraftstoffzufuhr wird ein der mechanischen Reibung des Verbrennungsmotors entsprechendes Bremsmoment erzeugt. Naturgemäß sind bei der Abbremsung eines Fahrzeugs größere Bremskräfte erforderlich, die über ein Bremspedal aufgebracht und gegebenenfalls über einen Bremskraftverstärker verstärkt werden. Die Energie wird an den Bremsscheiben größtenteils durch Reibung in Wärme umgesetzt. Bei Schienenfahrzeugen mit elektromotorischem Antrieb ist es üblich, den Elektromotor beim Bremsvorgang als Generator zu betreiben, um die dann induzierte elektrische Energie über Widerstände als Heizenergie zu nutzen. Bei nicht-spurgebundenen Fahrzeugen, die mit einem elektromotorischem Antrieb ausgestattet sind, kann man ebenfalls an eine derartige Nutzbremsung denken. Allerdings sind damit die Möglichkeiten eines elektromotorischen Antriebs noch nicht ausgeschöpft, da bei einem modernen elektromotorischen Antrieb üblicherweise eine Steuerungselektronik und eine Leistungselektronik vorhanden sind, die eine über die Nutzung der Bremsenergie als Heizenergie hinausgehende Nutzung der beim Bremsvorgang anfallenden Energie gestatten.

Aus der DE 37 25 620 A1 ist eine Antriebs-und Bremskonzeption für ein nicht-spurgebundenes Fahrzeug mit Verbrennungsmotor und einem mechanisch-hydraulischen Bremssystem bekannt, bei dem der Verbrennungsmotor einen elektrischen Generator antreibt. Die dadurch erzeugte elektrische Energie wird über eine elektronische Steuerung mit Leistungselektronik vier Elektromotoren zugeführt, die einzeln jeweils antriebstechnisch mit einem Antriebsrad des Fahrzeugs verbunden sind. Das Fahrzeug ist zudem mit einem je nach Bedarf als elektrischer Motor oder Generator arbeitenden Schwungradspeicher ausgestattet. Bei Betätigung des Bremspedals verteilt die elektronische Steuerung des Fahrzeugs die abgeforderte Bremskraft nach einem vorgegebenen Kennfeld auf das mechanisch-hydraulische Bremssystem und die elektrischen Antriebsmotoren, die dann als elektrische Generatoren arbeiten, und leitet den erzeugten Strom dem Schwungradspeicher zu. Bei Bedarf ist die gespeicherte Energie von der Steuerung abrufbar zur Wiedereinspeisung in die Elektromotoren. Bei einer Bremsung werden die Elektromotoren bei diesem Fahrzeug nur dann herangezogen, wenn der Schwungradspeicher noch nicht voll geladen ist und es sich außerdem um eine "Normalbremsung" handelt; das bedeutet, daß in Fällen hoher angeforderter Bremskräfte allein das mechanisch-hydraulische Bremssystem eingesetzt wird. Bei diesem Fahrzeug kommt es ebenso wie bei den anderen bisher bekannten Fahrzeugen zu der Erscheinung, daß das Fahrzeug beim Anhalten, insbesondere wenn dies mit starker Verzögerung erfolgt, in der letzten Phase des Bremsvorgangs ruckartig zum Stillstand kommt. Dies wird von Fahrer und Fahrgästen vielfach als unangenehm empfunden.

Der Erfindung liegt die Aufgabe zugrunde, eine Bremseinrichtung für ein Fahrzeug der gattungsgemäßen Art anzugeben, die im Hinblick auf eine möglichst effiziente Ausnutzung gegebener Bauelemente des Fahrzeugs ohne nennenswerten zusätzlichen Aufwand den Fahrcomfort ohne Beeinträchtigung der Sicherheit beim Abbremsen verbessert.

Diese Aufgabe wird erfindungsgemäß durch die kennzeichnenden Merkmale des Patentanspruchs 1 gelöst. Vorteilhafte Weiterbildungen der Erfindung sind in den Unteransprüchen 2 - 5 angegeben.

Ein Fahrzeug mit der erfindungsgemäßen Bremseinrichtung ist vorzugsweise nicht nur mit einem mechanisch-hydraulischen Bremssystem sondern gleichzeitig auch mit einem elektrisch betätigten Bremssystem ausgestattet, das wiederum aus verschiedenen Systemen bestehen kann. Bei einem Fahrzeug mit elektromotorischem Antrieb ist das elektrische Bremssystem zumindest in der Weise ausgebildet, daß die Elektromotoren von der elektronischen Steuerung zum Bremsen in den Generatorbetrieb umgeschaltet werden und auf diese Weise ein Bremsmoment erzeugen. Die dabei erzeugte elektrische Energie kann beispielsweise in einem Energiespeicher (z.B. Schwungradspeicher oder Akkumulator) eingespeichert werden, zum Antrieb von Nebenaggregaten (z.B. Klimaanlage, Ventilator) oder auch für Heizzwecke verwendet werden. Zusätzlich oder alternativ kann das elektrische Bremssystem z.B. auch eine Wirbelstrombremse umfassen. Die Leistungsfähigkeit der verschiedenen Bremssysteme kann auf die maximal erforderliche Bremskraft oder auch nur auf einen Bruchteil dieser Maximalbremskraft ausgelegt sein. Zumindest das mechanisch-hydraulische Bremssystem wird aus Sicherheitsgründen stets die maximal erforderliche Bremskraft allein aufbringen können.

Um bei Bedarf die durch Schalten der Elektromotoren in den Generatorbetrieb erreichbar Bremsenergie noch zu erhöhen, wird vorzugsweise vor oder parallel zu der Aktivierung der mechanisch-hydraulischen Bremsanlage eine elektrische Wirbelstrom-Bremsanlage in Betrieb gesetzt, die bei einem Bremsvorgang von den im Generatorbetrieb arbeitenden Elektromotoren gespeist wird. Mithin stehen bei dieser Variante insgesamt drei Möglichkeiten zur Verfügung, eine Abbremsung des Fahrzeugs zu bewirken: 1. erfolgt eine Abbremsung durch Schalten des Antriebs-Elektromotors als Generator, 2. kann eine Abbremsung durch eine (übliche) mechanisch-hydraulische Bremsanlage erfolgen, und 3. wird bei einem Bremsvorgang die elektrische Wirbelstrombremse mit Strom gespeist.

Das Speisen der elektrischen Wirbelstrombremse beim Bremsvorgang ist hier deshalb besonders günstig, weil der zum Speisen der Wirbelstrombremse benötigte elektrische Strom von dem dann als Generator arbeitenden Elektromotor geliefert wird.

Die elektrische Wirbelstrombremse hat außerdem den beträchtlichen Vorteil, daß ein an das Fahrzeug gekoppelter Anhänger wirksam abgebremst werden kann, ohne daß dies - wie bisher - ausschließlich mittels mechanischer Bremsung erfolgen muß.

Speziell eine elektronisch gesteuerte Bremsanlage, die bis 100 % des maximal erforderlichen Bremsmoments liefert, aber auch eine solche mit kleineren Bremskräften läßt sich, wie im folgenden näher erläutert wird, erfindungsgemäß so ausbilden, daß sie ein völlig ruckfreies Anhalten des Fahrzeugs gestattet, ohne daß der Fahrer sich hierzu besonders bemühen müßte.

Die Erfindung sieht dazu vor, daß von der elektronischen Steuerung bei etwa konstant gehaltenem Bremspedalweg die Fahrzeuggeschwindigkeit erfaßt wird, kurz vor Erreichen der Fahrzeuggeschwindigkeit "0", z.B. bei 1...3 km/h, die Bremskraft auf einen Minimalwert (auf ebener Fahrbahn z.B. den Wert "0") heruntergeregelt wird und daß bei Erkennen der Fahrzeuggeschwindigkeit "0" die Bremskraft sprunghaft wieder auf einen Wert erhöht wird, bei dem das Fahrzeug im Stillstand gehalten werden kann.

Die elektronische Steuerung gewährleistet auf diese Weise ein praktisch völlig ruckfreies Abbremsen, ohne daß hierzu der Fahrer besonders viel Feingefühl beim Betätigen des Bremspedals aufbringen muß. Üblicherweise erfolgt das ruckende Anhalten eines Fahrzeugs aufgrund des Übergangs zwischen Gleitreibung in Haftreibung an den Bremsscheiben oder Bremsklötzen. Durch das kontinuierliche Herunterregeln der Bremskraft ist im Moment des Anhaltens des Fahrzeugs die Gleitreibung praktisch null. Wenn das Fahrzeug stillsteht, werden die Bremsen durch sprunghaftes Erhöhen der Bremskraft wieder angedrückt oder angezogen, so daß das Fahrzeug nicht wegrollen kann.

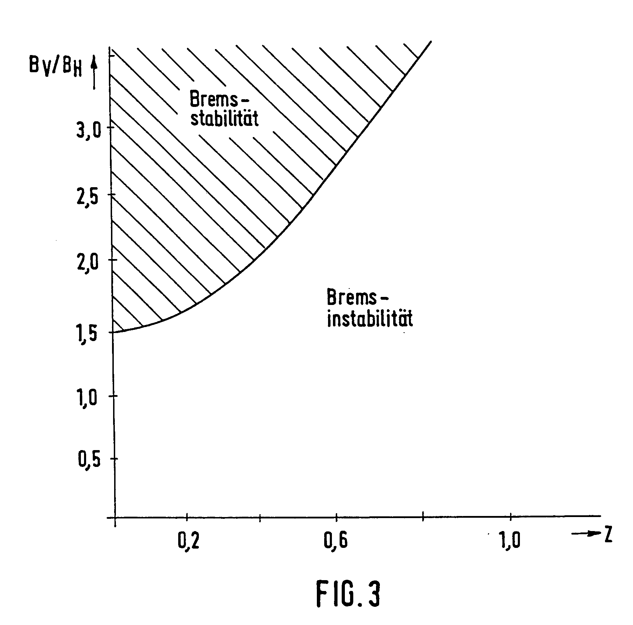

Es ist bekannt, daß die Bremskraftverteilung auf Vorderachse und Hinterachse in Abhängigkeit der Abbremsung zur Gewährleistung der Bremsstabilität einer nicht-linearen Funktion entspricht. Diese bekannte Beziehung ist in Fig. 3 dargestellt. Die Abbremsung z errechnet sich aus der Beziehung

$$z = -\frac{\ddot{x}}{g} ,$$

wobei x die Verzögerung des Fahrzeugs und g die Erdbeschleunigung ist. Wie aus Fig. 3 ersichtlich ist, muß zur Gewährleistung der Bremsstabilität die auf die Räder der Vorderachse aufgebrachte Bremskraft $B_v$ bei höheren Werten von z gegenüber der auf die Räder der Hinterachse aufgebrachten Bremskraft $B_h$ relativ erhöht werden. Der schraffierte Bereich oben links in Fig. 3 ist der Bereich, in dem die Bremsstabilität gewährleistet ist, trockener Fahrbahnbelag vorausgesetzt. Im übrigen Bereich besteht Bremsinstabilität.

Bei der erfindungsgemäßen Bremseinrichtung ist nun vorteilhafterweise vorgesehen, daß die Bremskraft oder das Bremsmoment für die Vorder- bzw. die Hinterachse von einer elektronischen Steuerung, vorzugsweise von der ohnehin in dem mit einem elektromotorischen Antrieb versehenen Fahrzeug vorhandenen elektronischen Steuerung, abhängig von der Abbremsung z verteilt wird. Der Bereich, in welchem die Bremskraftverteilung auf die Räder der Vorderachse bzw. die der Hinterachse erfolgt, reicht von etwa 1,5 bis etwa 3,5.

Die Beschleunigung bzw. die Verzögerung des Fahrzeugs läßt sich bei einem solchen Fahrzeug anhand der zeitlichen Änderung der Drehzahlen der die Räder antreibenden Elektromotoren relativ einfach erfassen. Vorzugsweise wird jedoch ein separater Beschleunigungssensor des Fahrzeugs verwendet, wobei in Abhängigkeit von den Ausgangssignalen dieses eine Längsbeschleunigung oder eine Längsverzögerung erfasenden Beschleunigungssensors die Bremskraftverteilung laufend aktualisiert wird.

Damit läßt sich die Bremskraft so verteilen, daß auf jeden Fall die erforderliche Bremsstabilität gemäß Fig. 3 erreicht wird. Bei einer "Vollbremsung" kann man mit der richtigen Bremskraftverteilung einen optimal kurzen Bremsweg erzielen, ohne daß dabei die Gefahr besteht, daß das Fahrzeug ausbricht, weil z.B. die Bremskraftverteilung nicht den gemäß Fig. 3 definierten Bedingungen entspricht.

Im folgenden wird die Erfindung anhand der Zeichnungen näher erläutert. Es zeigen:

Fig. 1   eine schematische Ansicht eines Kraftfahrzeugs mit elektromotorischem Einzelantrieb an vier Rädern,

Fig. 2   eine graphische Darstellung, die den Bremskraftverlauf in Abhängigkeit der Fahrgeschwindigkeit beim Anhalten eines Fahrzeugs mit erfindungsgemäßer Bremseinrichtung veranschaulicht und

Fig. 3   eine graphische Darstellung der Bremskraftverteilung in Abhängigkeit der Abbremsung zur Gewährleistung der Bremsstabilität.

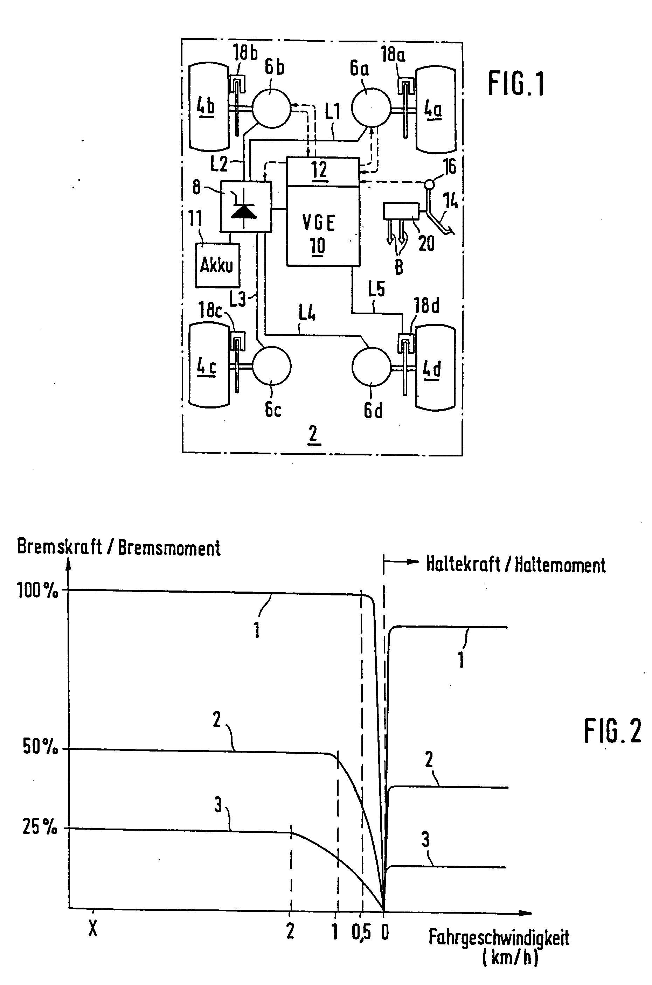

In Fig. 1 ist ein als ganzes mit 2 bezeichnetes Fahrzeug dargestellt, welches vier einzeln mittels Elektromotoren 6a...6d angetriebene Räder 4a...4d besitzt. Den Elektromotoren 6a, 6b wird von einer Verbrennungsmotor-Generator-Einheit (VGE) 10 über einen als Leistungselektronik-Einheit 8 ausgebildeten Energieverteiler Strom zugeführt, und zwar über Stromversorgungsleitungen L1, L2 für die Vorderräder 4a und 4b und Leitungen L3 und L4 für die Hinterräder 4c bzw. 4d.

Eine mit einem Mikroprozessor ausgestattete elektronische Steuerung 12 empfängt von den Elektromotoren 6a...6d Drehzahlsignale und empfängt außerdem von hier nicht dargestellten Sensoren weitere Signale, die kennzeichnend sind für den Betrieb der VGE 10, den Zustand der Elektromotoren 6a...6d, die Stellung eines nicht dargestellten Fahrhebels und dergleichen. Abhängig von der Stellung des Fahrhebels wird durch die VGE 10 eine bestimmte elektrische Leistung zur Verfügung gestellt, die über die Leistungselektronik-Einheit 8 nach Maßgabe der elektronischen Steuerung 12 an die Elektromotoren 6a...6d gegeben wird.

Als zusätzliche Energiequelle steht ein Akkumulator 11 zur Verfügung, aus dem Energie zum Beschleunigen des Fahrzeugs 2 wie für weitere Zwecke entnommen werden kann. Auch ist ein Speichern von Energie in dem Akkumulator 11 möglich. Hierzu wird der Ladezustand des Akkumulators 11 von einem Sensor erfaßt und der Steuerung 12 signalisiert, die gegebenenfalls die VGE 10 veranlaßt, elektrische Energie über die Leistungselektronik-Einheit 8 in den Akkumulator 11 einzuspeisen. Die VGE 10 besitzt einen Verbrennungsmotor, z.B. einen Otto-Motor, und einen elektrischen Generator mit vorzugsweise elektronischer Kommutierung.

Rechts in Fig. 1 ist schematisch ein Bremspedal 14 angedeutet, welches vom Fuß des Fahrers des Fahrzeugs 2 betätigt wird. Der Pedalweg des Pedals 14 wird von einem als Weggeber fungierenden Potentiometer 16 erfaßt, ein entsprechendes Signal wird von dem Potentiometer 16 an die Steuerung 12 geliefert. Mechanisch ist das Bremspedal 15 mit einer Bremszylinder/Bremskraftverstärker-Einheit 20 gekopelt, die in an sich bekannter Weise über Hydraulikleitungen B Bremskraft auf hier nicht dargestellte Bremszylinder an Bremsen der vier Räder 4a...4d überträgt.

Wenn das Fahrzeug 2 abgebremst wird, indem das Bremspedal 14 vom Fahrer ein Stück bewegt wird, wird dies von der Steuerung 12 über das Potentiometer 16 erfaßt. Die Steuerung 12 veranlaßt daraufhin, daß die Elektromotoren 6a...6d auf Generatorbetrieb umgeschaltet werden. Dadurch setzen die Elektromotoren 6a...6d der Drehbewegung der mit ihnen direkt gekoppelten Räder 4a...4d einen Widerstand entgegen. Über die Leitungen L1...L4 wird nun elektrische Energie von den Elektromotoren 4a...4d an die Leistungselektronik-Einheit 8 geliefert, von wo aus die Energie erfindungsgemäß verteilt wird. Die beim Bremsbetrieb anfallende elektrische Energie kann in den Akkumulator 11 eingespeichert werden, sofern dessen Ladezustand dies erlaubt. Im übrigen wird die gewonnene Nutzenergie wahlweise in elektrische Widerstandselemente eingeleitet werden, in denen sie in Wärmeenergie zu Heizzwecken umgesetzt wird, sie kann Nebenaggregaten, z.B. einem Lüfter, einem Kompressor für eine Klimaanlage oder dergleichen, zugeleitet werden, oder die aus dem Bremsvorgang gewonnene elektrische Energie kann direkt elektrischen Verbrauchern zugeleitet werden, z.B. der Beleuchtungsanlage des Fahrzeugs.

Das Verteilen der Energie geschieht grundsätzlich durch die Steuerung 12. Hierzu ist die Steuerung 12 mit den verschiedenen Bauelementen und Baugruppen über Signalleitungen verbunden, die in Fig. 1 gestrichelt dargestellt sind. Aus Gründen der besseren Übersichtlichkeit sind die Signalleitungen zu den hinteren Elektromotoren 6c und 6d nicht dargestellt.

Zusätzlich zu der Abbremsung durch das Schalten der Elektromotoren 6a...6d auf Generatorbetrieb erfolgt eine weitere Aufbringung einer Bremskraft über schematisch dargestellte Wirbelstrombremsen 18a...18d, von denen jeweils eine mit einer Antriebswelle eines Elektromotors 6a...6d gekoppelt ist. Sie erhalten elektrischen Strom von der VGE 10 über Leitungen $L_5$, von denen lediglich eine dargestellt ist.

Aus den Drehzahlen der Elektromotoren 6a...6d kann die Steuerung 12 die momentane Längsverzögerung des Fahrzeugs ermitteln. Hieraus wiederum kann die Steuerung 12 eine Bremskraftverteilung für die vorderen Elektromotoren 6a und 6b und die vorderen Wirbelstrombremsen 18a und 18b ebenso berechnen, wie für die hinteren Elektromotoren 6c und 6d und die hinteren Wirbelstrombremsen 18c und 18d. Damit läßt sich eine optimale Bremswirkung erreichen, d.h. der kürzeste Bremsweg.

Wie aus der obigen Erläuterung hervorgeht, umfaßt die Bremseinrichtung zwei Elemente, nämlich einmal einen elektrischen oder elektronischen Bremspedal-Weggeber 16 z.B. in Form eines Potentiometers und außerdem die übliche Mechanik, um über einen Bremskraftverstärker und einen Bremszylinder die benötigte hydraulische Energie für die üblichen Scheibenbremsen oder Trommelbremsen an den einzelnen Fahrzeugrädern 4a...4d bereitzustellen.

Anhand von Fig. 2 wird im folgenden die Wirkungsweise der elektronisch gesteuerten Bremseinrichtung zum ruckfreien Anhalten des Fahrzeugs beschrieben. Wenn beispielsweise das Bremspedal so weit durchgetreten ist, daß über die elektronische Bremsung 100 % der Bremskraft erzeugt werden, so wird unter gleichzeitiger Überwachung der Fahrzeuggeschwindigkeit zunächst die volle Bremskraft so lange aufgebracht, bis die Fahrzeuggeschwidigkeit auf einen Wert nahe bei Null, beispielsweise 0,5 km/h abgenommen hat (Kennlinie "1"). Dann wird die Bremskraft sehr schnell heruntergeregelt, so daß sie bei Erreichen der Fahrzeuggeschwindigkeit "0" auch z.B den Wert "0" erreicht. Da beim Erreichen der Fahrzeuggeschwindigkeit "0" keine Bremskraft mehr aufgebracht wird, erfolgt auch kein Rucken des Fahrzeugs, welches bei herkömmlichen Bremsanlagen durch den Übergang zwischen Gleitreibung und Haftreibung an den Bremsscheiben entsteht. Um das Fahrzeug nicht wegrollen zu lassen, wird nach Erreichen des Fahrzeugstillstands (Fahrgeschwindigkeit ≈ 0) die Bremskraft sprunghaft auf einen gewissen Wert erhöht, der unterhalb der zuvor beim Abbremsen des Fahrzeugs aufgebrachten Bremskraft liegen kann, um lediglich das Fahrzeug in der gegebenen Stellung (Steigung!) zu halten.

In Fig. 2 sind noch weitere Kennlinien "2" und "3" für das Anhalten des Fahrzeugs bei niedrigerer Bremskraft dargestellt. Dabei setzt das Herunterregeln der Bremskraft auf "0" bereits bei 1 km/h bzw. bei 2 km/h ein.

Dadurch, daß die elektronische Steuerung den Fahrzeugzustand im Hinblick auf aktuelle Geschwindigkeit und Verzögerung während des Bremsvorgangs kontinuierlich überwacht, läßt sich neben der zuvor beschriebenen Komfortsteigerung durch ein stets ruckfreies Anhalten auch noch eine Erhöhung der Sicherheit beim Bremsen erreichen. Dies kann die Steuerung ohne zusätzlichen Bauaufwand dadurch gewährleisten, daß aufgrund der aktuell erfaßten Werte der Abbremsung z eine laufende Aktualisierung der Bremskraftverteilung $B_V/B_H$ zwischen Vorderachse ($B_V$) und Hinterachse ($B_H$) vorgenommen wird, wobei dieses Verhältnis entsprechend Fig. 3 in der Weise in einem Wertebereich von etwa 1,5 - 3,5 gehalten wird, daß der Bereich der Bremsstabilität nicht verlassen wird (oberhalb der Kennlinie).

**Patentansprüche**

1.　Bremseinrichtung in Verbindung mit einer elektrisch oder elektronisch gesteuerten Bremsanlage für ein nicht-spurgebundenes Fahrzeug, insbesondere für ein Fahrzeug (2) mit mindestens einem Elektromotor (6), der das Fahrzeug (2) antreibt und über eine Leistungselektronik-Einheit (8) von einem elektrischen Generator (10) und/oder einem elektrischen Speicher (11) mit Strom gespeist wird, mit einer Steuerung (12), und mit einer mittels Bremspedal (14) betätigten Bremsanlage (20), ferner mit einem Verzögerungssensor (16) zum Erkennen eines Abbremsens des Fahrzeugs (2), wobei bei abbremsendem Fahrzeug der Elektromotor (6a...6d) von der Steuerung (12) als Generator geschaltet wird und die Steuerung (12) bei Vorhandensein eines elektrischen Speichers (11) die von dem Elektromotor (6a...6d) im Generatorbetrieb gelieferte Energie über die Leistungselektronik-Einheit (8) als Nutzenergie bereitstellt und mindestens einem Verbraucher zuführt,

dadurch gekennzeichnet,
daß die Steuerung (12) bei etwa konstant gehaltenem Bremspedalweg die Fahrzeuggeschwindigkeit erfaßt, kurz vor Erreichen der Fahrzeuggeschwindigkeit "O", z.B. bei 1...3 km/h, die Bremskraft auf einen Minimalwert herunterregelt und bei Erkennen der Fahrzeuggeschwindigkeit "O" die Bremskraft sprunghaft wieder erhöht, um das Fahrzeug im Stillstand zu halten.

2. Bremseinrichtung nach Anspruch 1,
dadurch gekennzeichnet,
daß die Steuerung (12) das Herunterregeln der Bremskraft kontinuierlich ohne Sprünge vornimmt.

3. Bremseinrichtung nach einem der Ansprüche 1 oder 2,
dadurch gekennzeichnet,
daß die Bremskraft ($B_v$; $B_h$) oder das Bremsmoment für die Vorder-bzw. die Hinterachse von der elektronischen Steuerung (12) abhängig von der Abbremsung (z) verteilt wird.

4. Bremseinrichtung nach Anspruch 3,
dadurch gekennzeichnet,
daß die Verteilung der Bremskraft im Verhältnisbereich $B_v/B_h$ = 1,5...3,5 abhängig von der Abbremsung (z) dergestalt erfolgt, daß die Bedingungen für Bremsstabilität eingehalten werden.

5. Bremseinrichtung nach Anspruch 3 oder 4,
dadurch gekennzeichnet,
daß zum Ermitteln der Abbremsung (z) ein Beschleunigungssensor vorgesehen ist, und daß abhängig von dessen Ausgangssignal die Bremskraftverteilung laufend aktualisiert wird.

## Claims

1. Brake-device in connection with an electrically or electronically controlled brake unit for a non-rail vehicle, particularly for a vehicle (2) with at least one electro-motor (6) which drives a vehicle concerned and is supplied with electrical current by means of an electronic power unit (8) from an electrical generator (10) and/or an electrical storage means (11), with a piloting means (12), and with a brake unit (20) operated by means of a brake pedal (14), furthermore with a delay sensor (16) for picking up braking of a vehicle (2), whereby, when a vehicle is being braked, an electro-motor (6a...6d) is connected as a generator by a piloting means (12) and a said piloting means (12), in presence of an electrical storage means (11) prepares energy, delivered by an electro-motor (6a...6d), during operation of a generator, as usable energy, by means of an electronic power unit and supplies at least one consuming component,
wherein
a piloting means (12) records speed of a vehicle, with a brake pedal which is maintained at a more or less constant depression and, shortly before a vehicle-speed of zero is reached, at a speed of 1-3 km/h for example, adjusts braking force down to a minimum value and, at a vehicle-speed of zero, again increases a brake-force in a leap in order to keep a vehicle concerned at a standstill.

2. Brake-device in accordance with claim 1,
wherein
a piloting means (12) implements regulated reduction of brake-force continuously.

3. Brake-device in accordance with one of claims 1 and 2,
wherein
brake-force ($B_v$;$B_h$) or braking torque for a front or rear axle is distributed, dependent upon braking (z), by an electronic piloting means (12).

4. Brake-device in accordance with claim 3,
wherein
distribution of brake-force within a range of ratios of $B_v/B_h$ = 1.5-3.5 occurs, dependent on braking (z), such that conditions for stability of braking are maintained.

5. Brake-device in accordance with claim 3 or 4,
wherein
an acceleration sensor is provided for recording braking (z), and distribution of brake-force is continuously readjusted dependent on an output signal of a said acceleration sensor.

## Revendications

1. Dispositif de freinage en liaison avec une installation de freinage commandée de façon électrique ou électronique, pour un véhicule non guidé, en particulier pour un véhicule (2) comportant au moins un moteur électrique (6), qui entraîne le véhicule (2) et est alimenté en courant, par l'intermédiaire d'une unité d'électronique de puissance (8), par un générateur électrique (10) et/ou un accumulateur électrique (11), une commande (12), et une installation de freinage (20) actionnée au moyen d'une pédale de frein (14), comportant de plus un capteur de temporisation (16) pour reconnaître un freinage du véhicule (2), le moteur électrique (6a ... 6d) étant commuté comme générateur par la commande (12) lors du freinage du véhicule, et la commande (12), lorsqu'il existe un accumulateur électrique (11), mettant à disposition, comme énergie recouvrable, l'énergie délivrée par le moteur électrique (6a ... 6d) en fonctionnement de générateur par l'intermédiaire de l'unité d'électronique de puissance (8) et l'amenant à au moins un utilisateur,
caractérisé en ce que la commande (12), pour une course de la pédale de frein maintenue à peu près constante, détecte la vitesse du véhicule, peu avant que la vitesse du véhicule n'atteigne "0", par exemple à 1 ... 3 km/h, règle la force de freinage à une valeur minimale, et, lorsque la vitesse du véhicule "0" est reconnue, augmente à nouveau brusquement la force de freinage pour maintenir à l'arrêt le véhicule.

2. Dispositif de freinage selon la revendication 1, caractérisé en ce que la commande (12) effectue le réglage de la force de freinage en diminuant celle-ci de façon continue sans à-coups.

3. Dispositif de freinage selon une des revendications 1 ou 2, caractérisé en ce que la force de freinage ($B_v$ ; $B_h$) ou le couple de freinage pour l'essieu avant ou l'essieu arrière est répartie par la commande électronique (12) de façon dépendant du taux de freinage (z).

4. Dispositif de freinage selon la revendication 3, caractérisé en ce que la répartition de la force de freinage dans la zone de rapport $B_v/B_h$ = 1,5 ... 3,5 est effectuée de façon dépendant du taux de freinage (z), de sorte que les conditions pour la stabilité du freinage soient maintenues.

5. Dispositif de freinage selon la revendication 3 ou 4, caractérisé en ce que, pour déterminer le taux de freinage (z), il est prévu un capteur d'accélération, et en ce que, de façon dépendant de son signal de sortie, la répartition de la force de freinage est actualisée de façon continue.

FIG.1

FIG.2

9

**FIG.3**